# EUROPÄISCHE PATENTSCHRIFT

(11) **EP 3 893 706 B1**
(45) Veröffentlichungstag und Bekanntmachung des Hinweises auf die Patenterteilung: **03.01.2024**
(21) Anmeldenummer: 19801295.7
(22) Anmeldetag: 07.11.2019
(51) Int. Cl.: A47J 42/40

(54) **KÜCHENMASCHINE ZUM BEARBEITEN VON LEBENSMITTELN**
KITCHEN APPLIANCE FOR PROCESSING FOOD
ROBOT MÉNAGER POUR TRAITER DES ALIMENTS

(30) Priorität: 12.12.2018 DE 102018131927
(43) Veröffentlichungstag der Anmeldung: 20.10.2021
(73) Patentinhaber: PI-Design AG, 6340 Baar (CH)
(72) Erfinder: BODUM, Jorgen, 6045 Meggen (CH)
(74) Vertreter: Walther Bayer Faber Patentanwälte PartGmbB
(86) Internationale Anmeldenummer: PCT/EP2019/080541
(87) Internationale Veröffentlichungsnummer: WO 2020/120038

(56) Entgegenhaltungen:
- DE-A1- 1 945 287
- DE-U- 1 777 456
- US-A1- 2004 211 848

## Beschreibung

Die vorliegende Erfindung betrifft eine Küchenmaschine zum Bearbeiten von Lebensmitteln.

Um Lebensmittel bearbeiten zu können, insbesondere um diese zerkleinern oder mahlen zu können, weisen die hierzu verwendeten Küchenmaschinen eine Antriebseinheit auf, mit dem ein Bearbeitungswerkzeug, beispielsweise ein rotierendes Messer oder ein Mahlwerk, angetrieben werden kann. Die Antriebseinheit ist üblicherweise in einem Gehäuse angeordnet, welches auch die Lagerungen der Antriebswellen und andere, für den Betrieb der Küchenmaschine notwendigen Maschinenelemente aufnimmt. Aus Kosten- und Gewichtsgründen werden immer mehr Maschinenelemente aus Kunststoff gefertigt, auch die Gehäuse.

Um die Antriebseinheit ein- und ausschalten zu können, weisen Küchenmaschinen einen Betätigungsmechanismus auf. Der Betätigungsmechanismus kann ein von einem Benutzer bewegbares Schaltelement umfassen, mit dem der Benutzer die Antriebseinheit ein- und ausschalten kann. Das Schaltelement wirkt aufgrund der Bewegung mit einem Schalter, beispielsweise mit einem Druckschalter, zusammen, der üblicherweise im Inneren des Gehäuses oder am Gehäuse angeordnet ist. Als das Innere des Gehäuses soll insbesondere der Hohlraum verstanden werden, den das Gehäuse umschließt.

Je nach Ausgestaltung des Betätigungsmechanismus ergibt sich die Situation, dass die Bewegung des Schaltelements in das Innere des Gehäuses geführt werden muss, um den dort angeordneten Schalter betätigen zu können. Infolgedessen weist das Gehäuse eine Öffnung auf, durch welche die Bewegung des Schaltelements in das Innere des Gehäuses und zum Schalter geführt werden kann.

Folglich können bearbeitete Lebensmittel, insbesondere zerkleinerte oder gemahlene Lebensmittel, über die Öffnung in das Innere des Gehäuses eindringen und sich dort ansammeln. Die sich ansammelnden Lebensmittel können dort faulen oder schimmeln, wodurch die Verwendung derartiger Küchenmaschinen für den Benutzer mit der Zeit unangenehm werden kann. Zudem können die bearbeiteten Lebensmittel den Schalter, die Antriebseinheit oder andere für den Betrieb der Küchenmaschine wesentliche Bauteile blockieren und somit den Betrieb der Küchenmaschine beeinträchtigen oder unmöglich machen.

Derartige Küchenmaschinen sind in der DE 17 77 456 U, der DE 11 65 218 A, der DE 18 93 644 U, der DE 19 45 287 A1, der US 2004/211848 A1 und der DE 18 26 747 U offenbart.

Aufgabe einer Ausführungsform der vorliegenden Erfindung ist es, eine Küchenmaschine zum Bearbeiten von Lebensmitteln anzugeben, mit welchem es mit einfachen und kostengünstigen Mitteln möglich ist, das Eindringen von bearbeiteten Lebensmitteln in das Innere des Gehäuse zu verhindern.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft eine Küchenmaschine zum Bearbeiten von Lebensmitteln, umfassend
- ein Gehäuse, in oder an welchem eine Antriebseinheit zum Antreiben eines Bearbeitungswerkzeugs zum Bearbeiten von Lebensmitteln angeordnet ist, und
- einen Betätigungsmechanismus zum Betätigen der Antriebseinheit, wobei der Betätigungsmechanismus
- ein außerhalb des Gehäuses angeordnetes, bewegbares Schaltelement,
- einen innerhalb des Gehäuses angeordneten Schalter, und
- eine das Gehäuse durchdringende Öffnung umfasst,
- der Schalter mit dem Schaltelement zum Betätigen der Antriebseinheit dadurch schaltbar ist, dass das Schaltelement relativ zum Schalter bewegt wird, und
- die Küchenmaschine ein die Öffnung dichtend verschließendes Dichtelement aufweist, welches die Bewegung des Schaltelements auf den Schalter überträgt.

Das Dichtelement weist vorschlagsgemäß zwei Funktionen auf. Zum einen folgt das Dichtelement der Bewegung des Schaltelements und gewährleistet die Übertragung der Bewegung des Schaltelements in das Innere des Gehäuses, so dass das Schaltelement mit dem innerhalb des Gehäuses angeordneten Schalter zusammenwirken kann. Der Benutzer kann daher die Antriebseinheit durch Bewegen des Schaltelements ein- oder ausschalten oder andere Funktionen der Antriebseinheit auslösen. Zum anderen verhindert das Dichtelement, dass sich bearbeitete Lebensmittel oder andere, sich in der Umgebung der Küchenmaschine befindende Gegenstände im Gehäuse ansammeln. Die Küchenmaschine kann daher hygienisch betrieben werden, so dass die Verwendung der Küchenmaschine für den Benutzer angenehm bleibt. Zudem wird sichergestellt, dass der Betrieb der Küchenmaschine nicht von sich im Gehäuse ansammelnden Gegenständen gestört wird, beispielsweise dadurch, dass die Gegenstände den Schalter und/oder die Antriebseinheit blockieren.

Nach Maßgabe einer weiteren Ausführungsform besteht das Dichtelement aus einem elastischen Kunststoff, insbesondere aus Silikon. Wie erwähnt, folgt das Dichtelement der Bewegung des Schaltelements. Da in dieser Ausführungsform das Dichtelement elastisch verformbar ist, sind keine weiteren Maßnahmen notwendig, um zu gewährleisten, dass das Dichtelement der Bewegung des Schaltelements folgen kann. Die Bewegbarkeit des Schaltelements kann dabei soweit beschränkt werden, dass das Dichtelement nicht irreversibel verformt werden kann.

In einer weitergebildeten Ausführungsform kann das Dichtelement eine erste Anlagefläche, mit welcher das Dichtelement am Gehäuse anliegt und eine von der ersten Anlagefläche ausgehende erste Erhebung aufweisen, welche in die Öffnung hineinragt oder die Öffnung durchdringt. Die Dichtfläche und damit die Dichtwirkung werden in dieser Ausführungsform erhöht. Zudem wird die Ansammlung von bearbeiteten Lebensmitteln oder von Flüssigkeit in der Öffnung verringert oder verhindert.

Eine weitergebildete Ausführungsform zeichnet sich dadurch aus, dass die erste Erhebung die Öffnung vollständig oder nahezu vollständig ausfüllt. Auch hierdurch wird die Dichtfläche erhöht und die Ansammlung von bearbeiteten Lebensmitteln und Flüssigkeiten in der Öffnung deutlich reduziert.

Nach Maßgabe einer weiteren Ausführungsform weist das Dichtelement eine zweite Anlagefläche und eine von der zweiten Anlagefläche ausgehende zweite Erhebung auf, mit welcher das Dichtelement mit dem Schalter zusammenwirkt. Die zweite Erhebung kann so ausgestaltet sein, dass sich der Schalter besonders gut betätigen lässt. Beispielsweise kann die zweite Erhebung so ausgestaltet sein, dass sie zumindest teilweise den Schalter umschließt, so dass ein Verrutschen und eine hieraus resultierende Fehlfunktion verhindert werden.

Eine weitere Ausführungsform zeichnet sich dadurch aus, dass die Küchenmaschine Positionierungsmittel aufweist, mit welchen die Position des Dichtelements innerhalb der Küchenmaschine festlegbar ist. Die Positionierungsmittel helfen insbesondere bei der Montage der Küchenmaschine, die Position des Dichtelements festzulegen und zu fixieren.

Nach Maßgabe einer weiteren Ausführungsform umfassen die Positionierungsmittel am Gehäuse angeordnete Vorsprünge, welche in korrespondierende Ausnehmungen oder Durchgangslöcher des Dichtelements eingreifen. In dieser Ausführungsform lässt sich das Dichtelement sehr schnell und einfach montieren, indem das Dichtelement auf die Vorsprünge aufgesteckt wird.

Gemäß einer weiteren Ausführungsform weisen die Positionierungsmittel am Gehäuse angeordnete Erhöhungen auf, welche das Dichtelement zumindest teilweise umgreifen. Auch in dieser Ausführungsform lässt sich das Dichtelement einfach montieren, indem das Dichtelement mit den Erhöhungen verspannt wird. Hierzu weist das Dichtelement ein Übermaß gegenüber den Erhöhungen auf, so dass ein Reibschluss erzeugt wird, mit dem das Dichtelement nicht nur positioniert, sondern auch fixiert wird.

In einer weitergebildeten Ausführungsform kann das Schaltelement einen Pin aufweisen, der in die Öffnung einbringbar oder durch die Öffnung durchführbar ist. Hierdurch wird sichergestellt, dass der Schalter zuverlässig betätigt werden kann. Ist der Schalter beispielsweise als ein Druckschalter ausgeführt, kann der Pin so dimensioniert werden, dass der Druck ausreichend groß ist, um den Druckschalter sicher betätigen zu können.

Eine fortentwickelte Ausführungsform gibt vor, dass die Küchenmaschine einen Anschlag aufweist, mit welchem die Bewegung des Schaltelements begrenzbar ist. Wie erwähnt, wird die Antriebseinheit dadurch geschaltet, dass das Schaltelement relativ zum Schalter bewegt wird. Dabei wird die Bewegung des Schaltelements vom Dichtelement auf den Schalter übertragen, wobei sich das Dichtelement je nach Ausführungsform verformt. Mit dem Anschlag kann die Bewegung des Schaltelements begrenzt werden. Hierdurch wird der Weg, den das Schaltelement beim Betätigen zurücklegen kann, soweit begrenzt, dass das Dichtelement nicht beschädigt wird.

Gemäß einer weiteren Ausführungsform der Küchenmaschine umfasst das Gehäuse ein inneres Gehäuse, in oder an welchem die Antriebseinheit angeordnet ist, und ein äußeres Gehäuse, welches das innere Gehäuse zumindest teilweise umgibt.

Insbesondere aus ästhetischen Gründen weisen einige Küchenmaschinen ein inneres Gehäuse und ein äußeres Gehäuse auf, wobei das äußere Gehäuse zumindest abschnittsweise über das innere Gehäuse gestülpt wird. Während das innere Gehäuse die Maschinenelemente aufnimmt, dient das äußere Gehäuse vorwiegend, aber nicht notwendigerweise ausschließlich dazu, der Küchenmaschine eine höherwertigere Anmutung zu geben. Das äußere Gehäuse ist daher häufig aus Metall, wobei man ebenfalls aus Kosten- und Gewichtsgründen bestrebt ist, die Wandstärke des äußeren Gehäuses gering zu halten. Idealerweise liegt das äu-ßere Gehäuse direkt am inneren Gehäuse an, so dass keine Zwischenräume zwischen dem inneren Gehäuse und dem äußeren Gehäuse ausgebildet werden. Aufgrund von Fertigungstoleranzen wird sich aber immer ein mehr oder weniger großer Zwischenraum ausbilden.

Weist die Küchenmaschine den Aufbau mit einem inneren Gehäuse und einem äußeren Gehäuse auf, ergibt sich je nach Ausgestaltung des Betätigungsmechanismus die Situation, dass die Bewegung des Schaltelements in das Innere des äußeren Gehäuses geführt werden muss, um den dort angeordneten Schalter betätigen zu können. Infolgedessen weist das äußere Gehäuse eine Öffnung auf, durch welche die Bewegung des Schaltelements in das Innere des äußeren Gehäuses und zum Schalter geführt werden kann.

Das Dichtelement verhindert dabei die Ansammlung von Lebensmitteln, insbesondere von zerkleinerten oder gemahlenen Lebensmitteln, welche über die Öffnung in das Innere des Gehäuses oder den Zwischenraum eindringen können.

In einer weitergebildeten Ausführungsform kann das Dichtelement zwischen dem inneren Gehäuse und dem äußeren Gehäuse angeordnet sein. In dieser Ausführungsform ist das Dichtelement im Zwischenraum zwischen dem inneren Gehäuse und dem äußeren Gehäuse angeordnet. Die sichtbare Kontur des äußeren Gehäuses wird daher nicht oder kaum vom Dichtelement gestört. Darüber hinaus wird das Dichtelement zumindest teilweise vom äußeren Gehäuse vor äußeren Einflüssen geschützt, so dass ihre Lebensdauer erhöht wird.

Bei einer weitergebildeten Ausführungsform kann das äußere Gehäuse aus Metall und das inneren Gehäuse aus Kunststoff bestehen. Das äußere Gehäuse verleiht der Küchenmaschine eine besonders wertige Anmutung. Zudem schützt das äußere Gehäuse das innere Gehäuse vor UV-Strahlung und ähnlichen Einflüssen, welche den Kunststoff altern und verspröden lassen können.

Bei einer weiteren Ausführungsform kann das Dichtelement mit der ersten Anlagefläche an einer ersten Oberfläche des äußeren Gehäuses anliegen und die erste Erhebung die Öffnung durchdringen und radiale Erweiterungen aufweisen, mit denen das Dichtelement auf einer zweiten Oberfläche des äußeren Gehäuses anliegt. Für den Fall, dass die Küchenmaschinen nur ein Gehäuse aufweist, liegt das Dichtelement mit der ersten Anlagefläche an der inneren Oberfläche und mit der radialen Erweiterung an der äußeren Oberfläche des Gehäuses an. In dieser Ausführungsform wird die Öffnung von innen und außen abgedichtet, so dass eine besonders hohe Dichtwirkung erzielt werden kann. Zudem ist die Position des Dichtelements in dieser Ausführungsform festgelegt, so dass keine weiteren Maßnahmen zur Positionierung und Fixierung getroffen werden müssen.

Bei einer weiteren Ausführungsform kann die Küchenmaschine als Mühle, insbesondere als Kaffeemühle ausgebildet sein. In dieser Ausführungsform kann die Küchenmaschine zum Mahlen von Getreide oder von auch als Lebensmittel zu verstehenden Kaffeebohnen verwendet werden. Da beim Mahlen von Getreide oder von Kaffeebohnen sehr kleine Partikel entstehen können, tritt hierbei die oben erwähnte Problematik des Ansammelns im Inneren des Gehäuses oder im Zwischenraum in besonders starkem Umfang auf. Der oben beschriebene Effekt des Dichtelements ist in dieser Ausführungsform besonders ausgeprägt.
- Figur 1A: ein erstes Ausführungsbeispiel einer vorschlagsgemäßen Küchenmaschine anhand einer perspektivischen Explosionsdarstellung,
- Figur 1B: eine Teilschnittdarstellung durch die in Figur 1A dargestellte Küchenmaschine im zusammengebauten Zustand,
- Figur 1C: eine perspektivische Darstellung der in Figur 1A dargestellten Küchenmaschine zusammengebauten Zustand,
- Figur 1D: eine isolierte und perspektivische Darstellung des inneren Gehäuses der in Figur 1A dargestellten Küchenmaschine,
- Figur 2A: eine perspektivische Darstellung eines ersten Ausführungsbeispiels eines vorschlagsgemäßen Dichtelements,
- Figur 2B: eine Schnittdarstellung des in Figur 2A gezeigten Dichtelements entlang der in Figur 2D definierten Schnittebene A-A,
- Figur 2C: eine Schnittdarstellung des in Figur 2A gezeigten Dichtelements entlang einer Schnittebene, die senkrecht zur in Figur 2D definierten Schnittebene verläuft,
- Figur 2D: eine Draufsicht des in Figur 2A gezeigten Dichtelements,
- Figur 3A: eine perspektivische Darstellung eines zweiten Ausführungsbeispiels eines vorschlagsgemäßen Dichtelements,
- Figur 3B: eine Schnittdarstellung durch das in Figur 3A gezeigte Dichtelement,
- Figur 4: eine isolierte und perspektivische Darstellung einer zweiten Ausführungsform des inneren Gehäuses eines zweiten Ausführungsbeispiels einer vorschlagsgemäßen Küchenmaschine,
- Figur 5: eine perspektivische Darstellung eines dritten Ausführungsbeispiels eines vorschlagsgemäßen Dichtelements,
- Figur 6A: ein viertes Ausführungsbeispiel einer vorschlagsgemäßen Küchenmaschine anhand einer perspektivischen Explosionsdarstellung,
- Figur 6B: das in Figur 6A dargestellte vierte Ausführungsbeispiel der vorschlagsgemäßen Küchenmaschine anhand einer Teilschnittdarstellung,
- Figur 6C: eine vergrößerte Darstellung des in Figur 6B gekennzeichneten Bereichs P,
- Figur 6D: eine perspektivische Darstellung des vierten Ausführungsbeispiels der Küchenmaschine im zusammengebauten Zustand,
- Figur 6E: eine vergrößerte Darstellung des in Figur 6D gekennzeichneten Bereichs Q, und
- Figuren 7A bis 7C: verschiedenen Ansichten eines vierten Ausführungsbeispiels eines vorschlagsgemäßen Dichtelements.

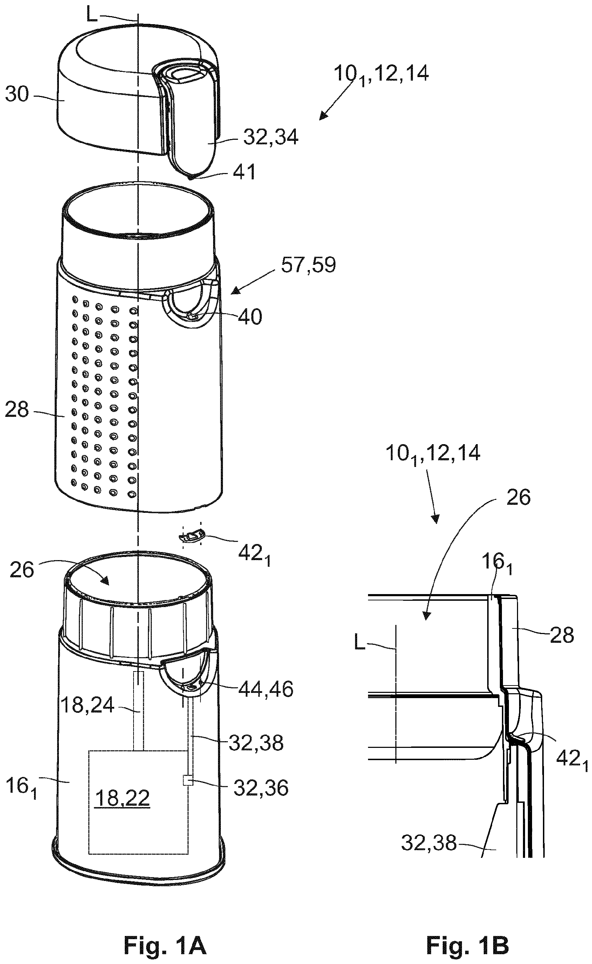

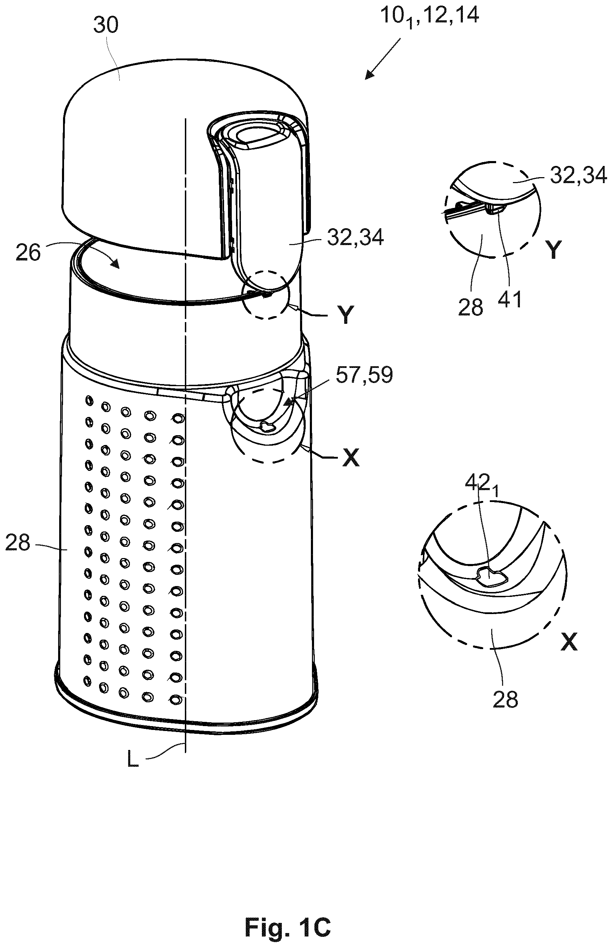

In den Figuren 1A und 1B ist ein erstes Ausführungsbeispiel einer Küchenmaschine 10₁ anhand einer perspektivischen Explosionsdarstellung bzw. einer Teilschnittdarstellung gezeigt, wobei in Figur 1A die Küchenmaschine 10₁ anhand einer Explosionsdarstellung gezeigt ist. Figur 1C zeigt die Küchenmaschine 10₁ im zusammengebauten Zustand.

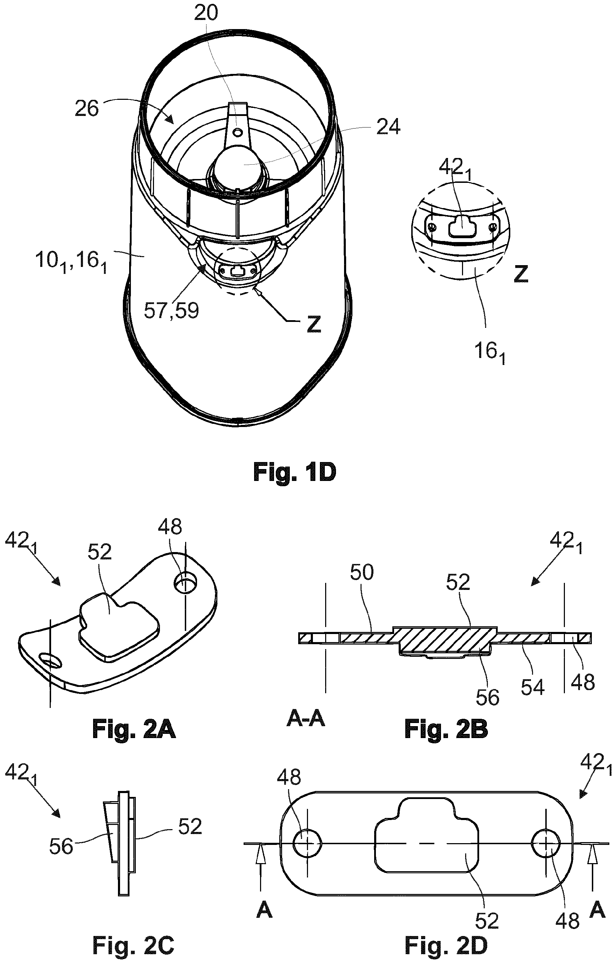

Im dargestellten Ausführungsbeispiel ist die Küchenmaschine 10₁ als eine Mühle 12, hier als eine Kaffeemühle 14, ausgebildet, mit welcher Kaffeebohnen zu Kaffeepulver gemahlen werden können. Die Kaffeemühle 14 umfasst ein inneres Gehäuse 16₁, welches in der Figur 1D separat anhand einer perspektivischen Darstellung gezeigt ist. Das innere Gehäuse 16₁ nimmt eine Antriebseinheit 18 auf, mit welcher ein Bearbeitungswerkzeug 20 (siehe Figur 1D) angetrieben werden kann. Die Antriebseinheit 18 ist in Figur 1A nur symbolisch dargestellt und umfasst einen Motor 22 und eine Antriebswelle 24, wobei das Bearbeitungswerkzeug 20 mit der Antriebswelle 24 verbindbar ist. Wie insbesondere aus der Figur 1D erkennbar, ist das Bearbeitungswerkzeug 20 in einem vom inneren Gehäuse 16₁ gebildeten Mahlraum 26 angeordnet, in welchen die Kaffeebohnen eingebracht werden können, um dort mit dem Bearbeitungswerkzeug 20 gemahlen zu werden.

Weiterhin umfasst die Kaffeemühle 14 ein äußeres Gehäuse 28, welches über das innere Gehäuse 16₁ gestülpt werden kann (siehe insbesondere Figur 1A), so dass das äußere Gehäuse 28 das innere Gehäuse 16₁ nahezu vollständig umschließt. Während das innere Gehäuse 16₁ aus einem Kunststoff besteht, besteht das äu-ßere Gehäuse 28 aus Metall. Aufgrund der Tatsache, dass das äußere Gehäuse 28 das innere Gehäuse 16₁ umschließt, wird die äußere Erscheinung der Kaffeemühle 14 weitgehend von dem äußeren Gehäuse 28 bestimmt.

Zudem umfasst die Kaffeemühle 14 einen Deckel 30, mit welchem der Mahlraum 26 verschlossen werden kann, um zu verhindern, dass beim Mahlen die Kaffeebohnen oder das gemahlene Kaffeepulver unkontrolliert aus dem Mahlraum 26 heraus befördert werden.

Darüber hinaus weist die Kaffeemühle 14 einen Betätigungsmechanismus 32 auf, der wie folgt aufgebaut ist: Der Betätigungsmechanismus 32 umfasst ein Schaltelement 34, welches im dargestellten Ausführungsbeispiel entlang einer Längsachse L der Kaffeemühle 14 bewegbar am Deckel 30 der Kaffeemühle 14 befestigt ist. Darüber hinaus umfasst der Betätigungsmechanismus 32 einen Schalter 36, der im dargestellten Ausführungsbeispiel als ein Druckschalter ausgeführt ist. Der Schalter 36 ist innerhalb des äußeren Gehäuses 28 angeordnet und wirkt mit der Antriebseinheit 18 derart zusammen, dass dann, wenn ein Druck auf den Schalter 36 ausgeübt wird, die Antriebseinheit 18 ein- oder ausgeschaltet wird oder andere Funktionen der Antriebseinheit 18 aktiviert werden, beispielsweise eine Beschleunigung oder eine Verzögerung des Motors 22. Darüber hinaus umfasst der Betätigungsmechanismus 32 einen Betätigungspin 38 (siehe Figur 1b), der ebenfalls innerhalb des äußeren Gehäuses 28 angeordnet und entlang der Längsachse L bewegbar ist.

Um die Antriebseinheit 18 zu betätigen, verschiebt ein Benutzer der Kaffeemühle 14 das Schaltelement 34 entlang der Längsachse L bezogen auf die in Figur 1A gewählte Darstellung nach unten. Das Schaltelement 34 kann mit einem nicht dargestellten Rückstellelement zusammenwirken, so dass das Schaltelement 34 wieder in die Ausgangsposition zurück gestellt wird, sobald der Benutzer das Schaltelement 34 loslässt. Beim Verschieben wirkt das Schaltelement 34 mit dem Betätigungspin 38 derart zusammen, dass die Bewegung des Schaltelements 34 auf den Betätigungspin 38 übertragen wird, der wiederum auf den Schalter 36, insbesondere den Druckschalter, drückt. Infolgedessen wird die Antriebseinheit 18 wie erwähnt betätigt.

Wie bereits erläutert, umschließt das äußere Gehäuse 28 das innere Gehäuse 16₁. Um die Bewegung des Schaltelements 34 auf den Betätigungspin 38 übertragen zu können, muss die Bewegung des Schaltelements 34 in das Innere des äußeren Gehäuses 28 geführt werden. Hierzu weist das äußere Gehäuse 28 eine Öffnung 40 auf, in welche ein Pin 41 des Schaltelements 34 eingreifen kann. Folglich kann die Bewegung des Schaltelements 34 auf den Betätigungspin 38 und von dort weiter auf den Schalter 36 übertragen werden.

Aufgrund von Fertigungstoleranzen liegt das äußere Gehäuse 28 nie exakt und unterbrechungsfrei bündig am inneren Gehäuse 16₁ an, so dass sich Zwischenräume zwischen dem inneren Gehäuse 16₁ und dem äußeren Gehäuse 28 bilden. Daher lässt es sich nicht vermeiden, dass insbesondere das Kaffeepulver, aber auch andere, sich in der Umgebung der Kaffeemühle 14 befindende Gegenstände, die Öffnung 40 durchqueren und sich in den Zwischenräumen ansammeln. Um dies zu verhindern, weist die erfindungsgemäße Kaffeemühle 14 ein Dichtelement 42₁ auf, welches insbesondere in den Figuren 1A, 1C und 1D zu erkennen ist. Das Dichtelement 42₁ verschließt die Öffnung 40 und ist derart ausgebildet, dass die Bewegung des Schaltelements 34 auf den Betätigungspin 38 übertragen werden kann. Im dargestellten Ausführungsbeispiel ist das Dichtelement 42₁ aus einem elastischen Material, in diesem Fall aus Silikon, und ist zwischen dem inneren Gehäuse 16₁ und dem äußeren Gehäuse 28 angeordnet. Wird das Schaltelement 34 wie oben erwähnt betätigt, kann sich das Dichtelement 42₁ verformen und daher der Bewegung des Schaltelements 34 folgen. Die die Bewegung des Schaltelements 34 kann daher auf den Betätigungspin 38 übertragen werden.

In den Figuren 2A bis 2D ist ein erstes Ausführungsbeispiel des erfindungsgemäßen Dichtelements 42₁ anhand von verschiedenen Darstellungen gezeigt. Um das Dichtelement 42₁ zwischen dem inneren Gehäuse 16₁ und dem äußeren Gehäuse 28 an der gewünschten Stelle positionieren und fixieren zu können, umfasst die Kaffeemühle 14 Positionierungsmittel 44. Im ersten Ausführungsbeispiel der Kaffeemühle 14 umfassen die Positionierungsmittel 44 zwei Vorsprünge 46 (siehe Figur 1D), welche vom inneren Gehäuse 16₁ gebildet werden und welche in korrespondierende Durchgangslöcher 48 (Figuren 2A, 2B und 2D) des Dichtelements 42₁ eingreifen können.

Weiterhin weist das Dichtelement 42₁ eine erste Anlagefläche 50 auf, mit welcher das Dichtelement 42₁ im montierten Zustand der Kaffeemühle 14 am äußeren Gehäuse 28 anliegt. Von der ersten Anlagefläche 50 geht eine erste Erhebung 52 aus, welche in die Öffnung 40 hineinragt und diese zumindest nahezu vollständig ausfüllt. Folglich entspricht der Querschnitt der ersten Erhebung 52 im Wesentlichen dem Querschnitt der Öffnung 40. Mit der ersten Erhebung 52 kann das Dichtelement 42₁ mit dem Pin 41 des Schaltelements 34 zusammenwirken.

Weiterhin umfasst das Dichtelement 42₁ eine zweite Anlagefläche 54, mit welcher das Dichtelement 42₁ im montierten Zustand am inneren Gehäuse 16₁ anliegt. Von der zweiten Anlagefläche 54 erhebt sich eine zweite Erhebung 56, mit welcher das Dichtelement 42₁ mit dem Betätigungspin 38 (Figur 1B) zusammenwirken und insbesondere am Betätigungspin 38 anliegen kann.

Wenn ein Benutzer die Kaffeemühle 14 betätigen will, schiebt er, wie bereits erwähnt, das Schaltelement 34 entlang der Längsachse L bezogen auf die Darstellung in Figur 1A nach unten, so dass der Pin 41 des Schaltelements 34 mit der ersten Erhebung 52 des Dichtelements 42₁ in Berührung kommt. Aufgrund der Elastizität des Dichtelements 42₁ verformt sich dieses infolge der Bewegung des Schaltelements 34 derart, dass die Bewegung des Schaltelements 34 mit der zweiten Erhebung 56, die am Betätigungspin 38 anliegt, auf den Betätigungspin 38 übertragen wird. Infolgedessen wird die Antriebseinheit 18 entsprechend betätigt.

Wie beispielsweise aus der Figur 1A erkennbar ist, ist die Öffnung 40 in einer Mulde 57 angeordnet, die vom äußeren Gehäuse 28 gebildet wird. Die Form der Mulde 57 korrespondiert in etwa mit der Form des freien Endes des Schaltelements 34, wo auch der Pin 41 angeordnet ist. Das Schaltelement 34 ist so angeordnet, dass es ab einem bestimmten Weg infolge des Betätigens an die Mulde 57 anschlägt. Folglich wirkt die Mulde 57 als ein Anschlag 59, mit welchem der Weg, den das Schaltelement 34 zurücklegen kann, begrenzt wird. Hierdurch wird insbesondere verhindert, dass das Dichtelement 42₁ zu stark verformt und dadurch beschädigt werden kann.

Das Dichtelement 42₁ verhindert, dass insbesondere Kaffeepulver, aber auch andere Gegenstände, die sich in der Umgebung der Kaffeemühle 14 befinden, durch die Öffnung 40 in den Zwischenraum zwischen dem inneren Gehäuse 16₁ und dem äußeren Gehäuse 28 eindringen können.

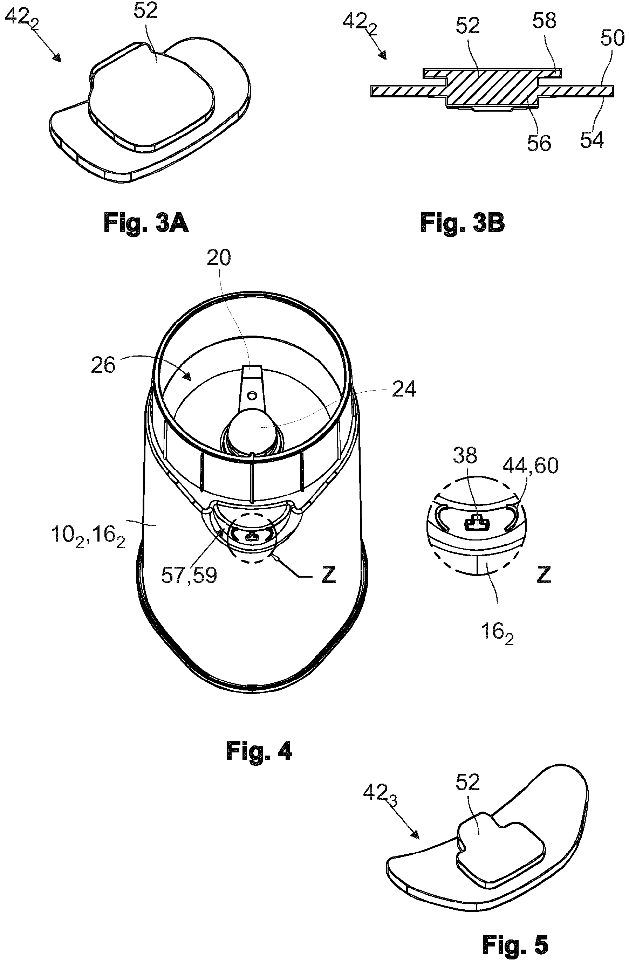

In den Figuren 3A und 3B ist ein zweites Ausführungsbeispiel des vorschlagsgemäßen Dichtelements 42₂ anhand von verschiedenen Darstellungen gezeigt. Wie auch im ersten Ausführungsbeispiel weist das Dichtelement 42₂ die erste Erhebung 52 auf, wobei von der ersten Erhebung 52 radiale Erweiterungen 58 ausgehen. Im montierten Zustand liegt die erste Anlagefläche 50 an der zum inneren Gehäuse 16₁ hinweisenden inneren Oberfläche des äußeren Gehäuses 28 an, während das Dichtelement 42₂ mit den radialen Erweiterungen 58 an der äußeren Oberfläche des äußeren Gehäuses 28 anliegt. Die Position des Dichtelements 42₂ in Bezug auf das äußere Gehäuse 28 und folglich in Bezug auf die gesamte Kaffeemühle 14 ist somit eindeutig festgelegt, so dass keine weiteren Positionierungsmittel 44 mehr benötigt werden.

In Figur 4 ist ein zweites Ausführungsbeispiel eines inneren Gehäuses 16₂ der erfindungsgemäßen Küchenmaschine 10₂, wiederum als eine Kaffeemühle 14 ausgeführt, anhand einer perspektivischen Darstellung gezeigt. In diesem Fall umfassen die Positionierungsmittel 44 zwei in etwa U-förmige Erhöhungen 60, welche vom inneren Gehäuse 16₂ gebildet werden. In der Figur 5 ist ein drittes Ausführungsbeispiel des erfindungsgemäßen Dichtelements 42₃ anhand einer perspektivischen Darstellung gezeigt, welche zwischen die beiden Erhöhungen 60 angeordnet werden kann. Das Dichtelement 42₃ nach dem dritten Ausführungsbeispiel wirkt der Art mit den Erhöhungen 60 zusammen, dass die Position des Dichtelements 42₃ zwischen dem inneren Gehäuse 16₁ und dem äußeren Gehäuse 28 eindeutig festgelegt ist.

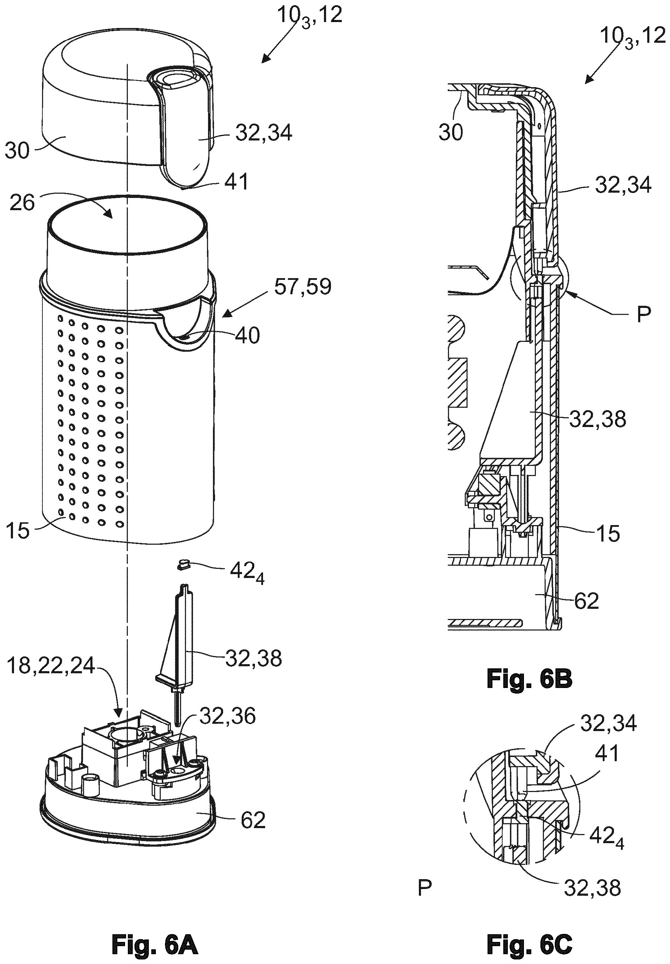

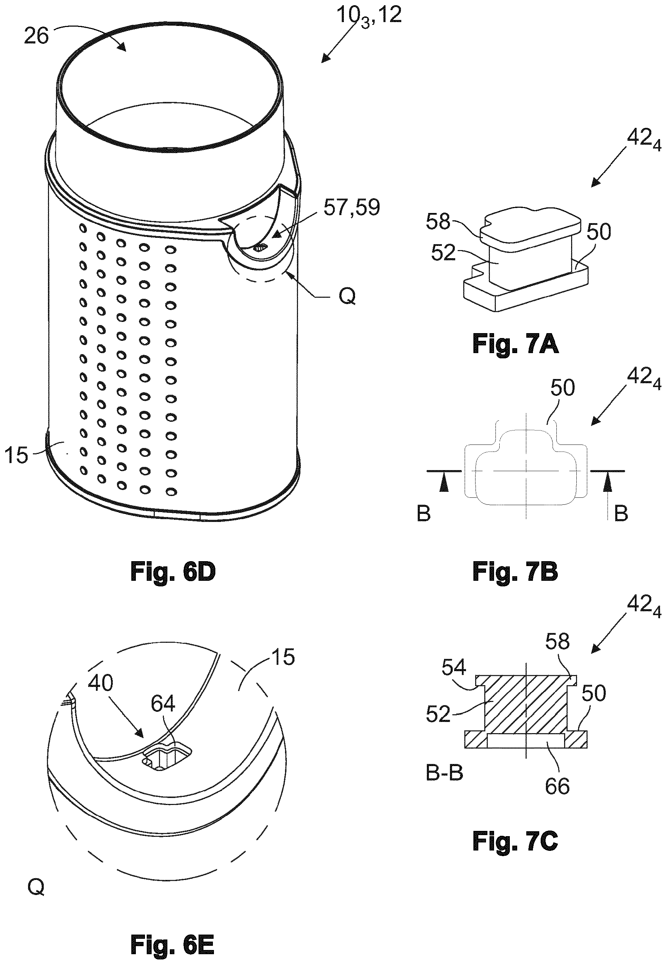

In Figur 6A ist ein drittes Ausführungsbeispiel der erfindungsgemäßen Küchenmaschine 10₃ anhand einer Explosionsdarstellung gezeigt. Figur 6B zeigt einen Teilschnitt durch die Küchenmaschine 10₃ im zusammengebauten Zustand und Figur 6C den in Figur 6B gekennzeichneten Ausschnitt in einer vergrößerten Darstellung. Figur 6D zeigt das dritte Ausführungsbeispiel der Küchenmaschine 10₃ im zusammengebauten Zustand anhand einer perspektivischen Darstellung und Figur 6E den in Figur 6D gekennzeichneten Ausschnitt anhand einer vergrößerten Darstellung.

Der wesentliche Aufbau der Küchenmaschine 10₃ nach dem dritten Ausführungsbeispiel entspricht dabei demjenigen der Küchenmaschine 10₁, 10₂ nach dem erste und dem zweiten Ausführungsbeispiel, so dass im Folgenden insbesondere auf die Unterschiede eingegangen wird. Der wesentliche Unterschied ist, dass das Gehäuse 15 der Küchenmaschine 10₃ nach dem dritten Ausführungsbeispiel 10₃ einteilig aufgebaut ist und somit kein inneres Gehäuse 16 und kein äußeres Gehäuse 28 aufweist. Das Gehäuse 15 ist vom Aufbau her vergleichbar mit dem äußeren Gehäuse 28 der Küchenmaschinen 10₁, 10₂ nach dem ersten und dem zweiten Ausführungsbeispiel.

Die hier nicht näher dargestellte Antriebseinheit 18 mit dem Motor und der Antriebswelle ist in einem Sockel 62 angeordnet, auf den das Gehäuse 15 aufgesteckt wird. Das Gehäuse 15 weist die Öffnung 40 auf, durch welches der Pin 41 mit dem im Inneren des Gehäuses 15 angeordneten Betätigungspin 38 des Betätigungsmechanismus 32 zusammenwirken kann, um die Antriebseinheit 18 betätigen zu können. Folglich können über die Öffnung 40 zerkleinerte Lebensmittel und Feuchtigkeit in das Innere des Gehäuses 15 gelangen. Um dies zu verhindern, ist das Dichtelement 42₄ nach einem vierten Ausführungsbeispiel in der Öffnung 40 angeordnet. Das Dichtelement 42₄ nach dem vierten Ausführungsbeispiel ist in verschiedenen Ansichten in den Figuren 7A bis 7C separat dargestellt.

Wie im zweiten Ausführungsbeispiel des Dichtelements 42₂ geht von der ersten Anlagefläche 50, mit welcher das Dichtelement 42₄ an der inneren Oberfläche des Gehäuses 15 anliegt, die erste Erhebung 52 aus, welche die radiale Erweiterung 58 bildet. Auf der radialen Erweiterung 58 ist die zweite Anlagefläche 54 angeordnet, mit welcher das Dichtelement 42₄ an der äußeren Oberfläche des Gehäuses 15 anliegt. Wie aus Figur 6E erkennbar, ist im Bereich der Öffnung 40 an der äußeren Oberfläche des Gehäuses 15 eine Vertiefung 64 vorgesehen, in welche die radiale Erweiterung 58 eingreift, so dass das Dichtelement 42₄ fluchtend mit der äußeren Oberfläche des Gehäuses 15 angeordnet werden kann. Zudem weist das Dichtelement 42₄ eine Ausnehmung 66 auf, in welche der Betätigungspin 38 eingreifen kann, so dass eine gewisse Führung des Betätigungspins 38 in Bezug auf das Dichtelement 42₄ bewirkt werden kann.

### Bezugszeichenliste

- 10: Küchenmaschine
- 10₁ - 10₃: Küchenmaschine
- 12: Mühle
- 14: Kaffeemühle
- 15: Gehäuse
- 16: inneres Gehäuse
- 16₁ - 16₃: inneres Gehäuse
- 18: Antriebseinheit

- 20: Bearbeitungswerkzeug
- 22: Motor
- 24: Antriebswelle
- 26: Mahlraum
- 28: äußeres Gehäuse

- 30: Deckel
- 32: Betätigungsmechanismus
- 34: Schaltelement
- 36: Schalter
- 38: Betätigungspin

- 40: Öffnung
- 41: Pin
- 42: Dichtelement
- 42₁ - 42₄: Dichtelement
- 44: Positionierungsmittel
- 46: Vorsprung
- 48: Durchgangsloch

- 50: erste Anlagefläche
- 52: erste Erhebung
- 54: zweite Anlagefläche
- 56: zweite Erhebung
- 57: Mulde
- 58: radiale Erweiterung
- 59: Anschlag

- 60: Erhöhung
- 62: Sockel
- 64: Vertiefung
- 66: Ausnehmung

- L: Längsachse

## Patentansprüche

1. Küchenmaschine (10) zum Bearbeiten von Lebensmitteln, umfassend
- ein Gehäuse (15), in oder an welchem eine Antriebseinheit (18) zum Antreiben eines Bearbeitungswerkzeugs (20) zum Bearbeiten von Lebensmitteln angeordnet ist, und
- einen Betätigungsmechanismus (32) zum Betätigen der Antriebseinheit (18), wobei der Betätigungsmechanismus (32)
- ein außerhalb des Gehäuses (15) angeordnetes, bewegbares Schaltelement (34),
- einen innerhalb des Gehäuses (15) angeordneten Schalter (36), und
- eine das Gehäuse (15) durchdringende Öffnung (40) umfasst,
- der Schalter (36) mit dem Schaltelement (34) zum Betätigen der Antriebseinheit (18) dadurch schaltbar ist, dass das Schaltelement (34) relativ zum Schalter (36) bewegt wird, und
- die Küchenmaschine (10) ein die Öffnung (40) dichtend verschließendes Dichtelement (42) aufweist, welches die Bewegung des Schaltelements (34) auf den Schalter (36) überträgt.

2. Küchenmaschine (10) nach Anspruch 1,
**dadurch gekennzeichnet, dass** das Dichtelement (42) aus einem elastischen Kunststoff, insbesondere aus Silikon, besteht.

3. Küchenmaschine (10) nach einem der Ansprüche 1 oder 2,
**dadurch gekennzeichnet, dass** das Dichtelement (42)
- eine erste Anlagefläche (50), mit welcher das Dichtelement (42) am Gehäuse (15) anliegt und
- eine von der ersten Anlagefläche (50) ausgehende erste Erhebung (52) aufweist, welche in die Öffnung (40) hineinragt oder die Öffnung (40) durchdringt.

4. Küchenmaschine (10) nach Anspruch 3,
**dadurch gekennzeichnet, dass** die erste Erhebung (52) die Öffnung (40) vollständig oder nahezu vollständig ausfüllt.

5. Küchenmaschine (10) nach einem der Ansprüche 3 oder 4, **dadurch gekennzeichnet, dass** das Dichtelement (42) eine zweite Anlagefläche (54) und eine von der zweiten Anlagefläche (54) ausgehende zweite Erhebung (56) aufweist, mit welcher das Dichtelement (42) mit dem Schalter (36) zusammenwirkt.

6. Küchenmaschine (10) nach einem der vorherigen Ansprüche, **dadurch gekennzeichnet, dass** die Küchenmaschine (10) Positionierungsmittel (44) aufweist, mit welchen die Position des Dichtelements innerhalb der Küchenmaschine (10) festlegbar ist.

7. Küchenmaschine (10) nach Anspruch 6,
**dadurch gekennzeichnet, dass** die Positionierungsmittel (44) am Gehäuse (15) angeordnete Vorsprünge (46) umfassen, welche in korrespondierende Ausnehmungen oder Durchgangslöcher (48) des Dichtelements (42) eingreifen.

8. Küchenmaschine (10) nach Anspruch 6,
**dadurch gekennzeichnet, dass** die Positionierungsmittel (44) am Gehäuse (15) angeordnete Erhöhungen (60) aufweisen, welche das Dichtelement (42) zumindest teilweise umgreifen.

9. Küchenmaschine (10) nach einem der vorherigen Ansprüche, **dadurch gekennzeichnet, dass** das Schaltelement (34) einen Pin (41) aufweist, der in die Öffnung (40) einbringbar oder durch die Öffnung (40) durchführbar ist.

10. Küchenmaschine (10) nach einem der vorherigen Ansprüche, **dadurch gekennzeichnet, dass** die Küchenmaschine (10) einen Anschlag (59) aufweist, mit welchem der Weg des Schaltelements (34) begrenzbar ist.

11. Küchenmaschine (10) nach einem der vorherigen Ansprüche, **dadurch gekennzeichnet, dass** das Gehäuse (15)
- ein inneres Gehäuse (16), in oder an welchem eine Antriebseinheit (18) zum Antreiben eines Bearbeitungswerkzeugs (20) zum Bearbeiten von Lebensmitteln angeordnet ist, und
- ein äußeres Gehäuse (28) umfasst, welches das innere Gehäuse (16) zumindest teilweise umgibt.

12. Küchenmaschine (10) nach Anspruch 11,
**dadurch gekennzeichnet, dass** das Dichtelement (42) zwischen dem inneren Gehäuse (16) und dem äußeren Gehäuse (28) angeordnet ist.

13. Küchenmaschine (10) nach einem der Ansprüche 11 oder 12, **dadurch gekennzeichnet, dass** das äußere Gehäuse (28) aus Metall und das inneren Gehäuse (16) aus Kunststoff bestehen.

14. Küchenmaschine (10) nach einem der Ansprüche 11 bis 13, **dadurch gekennzeichnet, dass**
- das Dichtelement (42) mit der ersten Anlagefläche (50) an einer ersten Oberfläche des äußeren Gehäuses (28) anliegt, und
- die erste Erhebung (52) die Öffnung (40) durchdringt und radiale Erweiterungen aufweist, mit denen das Dichtelement (42) auf einer zweiten Oberfläche des äußeren Gehäuses (28) anliegt.

15. Küchenmaschine (10) nach einem der vorherigen Ansprüche, **dadurch gekennzeichnet, dass** die Küchenmaschine (10) als Mühle (12), insbesondere als Kaffeemühle (14) ausgebildet ist.

## Claims

1. Kitchen appliance (10) for processing food, comprising
- a housing (15), in or on which a drive unit (18) is arranged for driving a processing tool (20) for processing food, and
- an actuating mechanism (32) for actuating the drive unit (18), wherein the actuating mechanism (32) has
- a moveable switching element (34) arranged outside the housing (15),
- a switch (36) arranged inside the housing (15), and
- an opening (40) passing through the housing (15),
- the switch (36) being switchable with the switching element (34) for actuating the drive unit (18) such that the switching element (34) is moved relative to the switch (36), and
- the kitchen appliance (10) has a sealing element (42), which forms a seal while closing the opening (40) and transfers the movement of the switching element (34) to the switch (36).

2. Kitchen appliance (10) according to claim 1,
**characterized in that** the sealing element (42) is made from an elastic plastic, in particular, silicone.

3. Kitchen appliance (10) according to one of claims 1 or 2, **characterized in that** the sealing element (42) has
- a first contact surface (50), with which the sealing element (42) contacts the housing (15) and
- a first elevated section (52) that extends out from the first contact surface (50) and projects into the opening (40) or passes through the opening (40).

4. Kitchen appliance (10) according to claim 3, **characterized in that** the first elevated section (52) completely or almost completely fills the opening (40).

5. Kitchen appliance (10) according to one of claims 3 or 4, **characterized in that** the sealing element (42) has a second contact surface (54) and a second elevated section (56), which extends out from the second contact surface (54) and with which the sealing element (42) interacts with the switch (36).

6. Kitchen appliance (10) according to one of the preceding claims,
**characterized in that** the kitchen appliance (10) has positioning means (44), with which the position of the sealing element (42) can be defined within the kitchen appliance (10).

7. Kitchen appliance (10) according to claim 6, **characterized in that** the positioning means (44) has projections (46) that are arranged on the housing (15) and that engage in corresponding cut-outs or through holes (48) of the sealing element (42).

8. Kitchen appliance (10) according to claim 6, **characterized in that** the positioning means (44) has raised sections (60) that are arranged on the housing (15) and surround at least partially the sealing element (42).

9. Kitchen appliance (10) according to one of the preceding claims,
**characterized in that** the switching element (34) has a pin (41) that can be inserted into the opening (40) or can be guided through the opening (40).

10. Kitchen appliance (10) according to one of the preceding claims,
**characterized in that** the kitchen appliance (10) has a stop (59), with which the travel of the switching element (34) can be limited.

11. Kitchen appliance (10) according to one of the preceding claims,
**characterized in that** the housing (15) has
- an inner housing (16), in or on which a drive unit (18) is arranged for driving a processing tool (20) for processing food, and
- an outer housing (28), which at least partially surrounds the inner housing (16).

12. Kitchen appliance (10) according to claim 11, **characterized in that** the sealing element (42) is arranged between the inner housing (16) and the outer housing (28).

13. Kitchen appliance (10) according to one of claims 11 or 12, **characterized in that** the outer housing (28) is made from metal and the inner housing (16) is made from plastic.

14. Kitchen appliance (10) according to one of claims 11 to 13, **characterized in that**
- the sealing element (42) with the first contact surface (50) contacts a first surface of the outer housing (28), and
- the first elevated section (52) passes through the opening (40) and has radial extensions (58), with which the sealing element (42) contacts a second surface of the outer housing (28).

15. Kitchen appliance (10) according to one of the preceding claims,
**characterized in that** the kitchen appliance (10) is constructed as a grinder (12), especially as a coffee grinder (14).

## Revendications

1. Robot ménager (10) pour traiter des aliments, comprenant
- un boîtier (15), dans ou sur lequel est disposée une unité d'entraînement (18) pour entraîner un outil de traitement (20) pour traiter des aliments, et
- un mécanisme d'actionnement (32) pour actionner l'unité d'entraînement (18), le mécanisme d'actionnement (32) comprenant
- un élément de commutation (34) mobile disposé en dehors du boîtier (15),
- un commutateur (36) disposé à l'intérieur du boîtier (15), et
- une ouverture (40) pénétrant dans le boîtier (15),
- le commutateur (36) pouvant être commuté à l'aide de l'élément de commutation (34) pour actionner l'unité d'entraînement (18) par le fait que l'élément de commutation (34) est déplacé par rapport au commutateur (36), et
- le robot ménager (10) présentant un élément d'étanchéité (42) qui ferme l'ouverture (40) de manière étanche et qui transmet le mouvement de l'élément de commutation (34) au commutateur (36).

2. Robot ménager (10) selon la revendication 1,
**caractérisé en ce que** l'élément d'étanchéité (42) est constitué d'une matière plastique élastique, en particulier de silicone.

3. Robot ménager (10) selon l'une des revendications 1 ou 2,
**caractérisé en ce que** l'élément d'étanchéité (42) présente
- une première surface d'appui (50), avec laquelle l'élément d'étanchéité (42) s'applique contre le boîtier (15) et
- un premier bossage (52) qui part de la première surface d'appui (50) et qui dépasse dans l'ouverture (40) ou pénètre dans l'ouverture (40).

4. Robot ménager (10) selon la revendication 3,
**caractérisé en ce que** le premier bossage (52) remplit entièrement ou presque entièrement l'ouverture (40).

5. Robot ménager (10) selon l'une des revendications 3 ou 4,
**caractérisé en ce que** l'élément d'étanchéité (42) présente une seconde surface d'appui (54) et un second bossage (56) qui part de la seconde surface d'appui (54) et à l'aide duquel l'élément d'étanchéité (42) coopère avec le commutateur (36).

6. Robot ménager (10) selon l'une des revendications précédentes,
**caractérisé en ce que** le robot ménager (10) présente des moyens de positionnement (44) permettant de définir la position de l'élément d'étanchéité à l'intérieur du robot ménager (10).

7. Robot ménager (10) selon la revendication 6,
**caractérisé en ce que** les moyens de positionnement (44) comprennent des saillies (46) disposées sur le boîtier (15) qui viennent en prise dans des évidements ou trous de passage (48) correspondants de l'élément d'étanchéité (42).

8. Robot ménager (10) selon la revendication 6,
**caractérisé en ce que** les moyens de positionnement (44) présentent des reliefs (60) disposés sur le boîtier (15), qui enveloppent au moins en partie l'élément d'étanchéité (42).

9. Robot ménager (10) selon l'une des revendications précédentes,
**caractérisé en ce que** l'élément de commutation (34) présente un ergot (41) qui peut être introduit dans l'ouverture (40) ou passer dans l'ouverture (40).

10. Robot ménager (10) selon l'une des revendications précédentes,
**caractérisé en ce que** le robot ménager (10) présente une butée (59) à l'aide de laquelle la course de l'élément de commutation (34) peut être limitée.

11. Robot ménager (10) selon l'une des revendications précédentes, **caractérisé en ce que** le boîtier (15) comprend
- un boîtier intérieur (16), dans ou sur lequel est disposée une unité d'entraînement (18) pour entraîner un outil de traitement (20) pour traiter des aliments, et
- un boîtier extérieur (28) qui entoure en moins en partie le boîtier intérieur (16).

12. Robot ménager (10) selon la revendication 11,
**caractérisé en ce que** l'élément d'étanchéité (42) est disposé entre le boîtier intérieur (16) et le boîtier extérieur (28).

13. Robot ménager (10) selon l'une des revendications 11 ou 12,
**caractérisé en ce que** le boîtier extérieur (28) est constitué de métal et le boîtier intérieur (16) de matière plastique.

14. Robot ménager (10) selon l'une des revendications 11 à 13,
**caractérisé en ce que**
- l'élément d'étanchéité (42) s'applique avec la première surface d'appui (50) contre une première surface du boîtier extérieur (28), et
- le premier bossage (52) pénètre dans l'ouverture (40) et présente des extensions radiales avec lesquelles l'élément d'étanchéité (42) s'applique contre une seconde surface du boîtier extérieur (28).

15. Robot ménager (10) selon l'une des revendications précédentes, **caractérisé en ce que** le robot ménager (10) est réalisé sous la forme d'un moulin (12), en particulier un moulin à café (14).
